# EUROPÄISCHE PATENTSCHRIFT

(11) **EP 1 407 693 B1**
(45) Veröffentlichungstag und Bekanntmachung des Hinweises auf die Patenterteilung: **31.10.2007**
(21) Anmeldenummer: 03021280.7
(22) Anmeldetag: 19.09.2003
(51) Int. Cl.: A47C 3/04

(54) **Stapelbarer Stuhl**
Stackable chair
Chaise empilable

(30) Priorität: 10.10.2002 DE 10247346
(43) Veröffentlichungstag der Anmeldung: 14.04.2004
(73) Patentinhaber: Dauphin Entwicklungs- u. Beteiligungs GmbH, 91217 Hersbruck (DE)
(72) Erfinder: Ballendat, Martin, A-4950 Altheim (AT)
(74) Vertreter: Lösch, Christoph Ludwig Klaus

(56) Entgegenhaltungen:
- EP-A- 0 473 028
- CH-A- 657 258
- US-A- 2 649 136
- US-A- 2 730 419

## Beschreibung

Die Erfindung betrifft einen stapelbaren Stuhl mit einem Sitzkörper und einer Mehrzahl von Stuhlbeinen, die an diesem befestigt sind.

Derartige stapelbare Stühle sind durch offenkundige Vorbenutzung bekannt. Dort sind die Stuhlbeine über mindestens eine unterhalb der Sitzfläche angeordnete Zarge, welche die Stuhlbeine verbindet, mit dem Sitzkörper verbunden. Derartige Zargen als Verbindungsbeschläge bedingen, dass zwischen den Stühlen beim Stapeln ein erheblicher Zwischenraum verbleibt, sodass die Stühle auch in gestapeltem Zustand noch relativ viel Platz beanspruchen.

Ein stapelbar Stuhl ist zum Beispiel aus Dokument US-A-2730419 bekannt.

Der Erfindung lag daher die Aufgabe zugrunde, einen Stuhl der eingangs genannten Art derart weiterzubilden, dass er kompakter gestapelt werden kann.

Diese Aufgabe ist erfindungsgemäß gelöst durch einen Stuhl mit den im Anspruch 1 angegebenen Merkmalen.

Erfindungsgemäß wurde erkannt, dass auf unterhalb der Sitzfläche angeordnete Verbindungsbeschläge verzichtet werden kann, wenn die Verbindungsplatte zur Befestigung der Stuhlbeine am Sitzkörper in eine Ausnehmung im Sitzkörper eingefügt werden kann. Beim Stapeln derart ausgeführter Stühle können die einzelnen Sitzkörper direkt oder nur mit geringem Zwischenraum aufeinander aufliegen, sodass ein kompaktes Stapeln gewährleistet ist. Bei einer Ausführung des Stuhls mit Stoffauflage kann beim Stapeln auf eine Stapelwanne an der Unterseite des Sitzkörpers verzichtet werden.

Eine Anbringung der Verbindungsplatten nach Anspruch 2 minimiert die erforderliche Materialstärke des Sitzkörpers bei gegebenen Anforderungen an die Belastbarkeit von diesem.

Die Ausgestaltung nach Anspruch 3 gewährleistet einen sicheren Halt der Verbindungsplatte in der Ausnehmung.

Eine Klebeverbindung nach Anspruch 4 lässt sich ohne besonderes Werkzeug herstellen.

Eine Oberflächenbehandlung nach Anspruch 5 verbessert die Klebewirkung, die mit einem bestimmten Kleber erreicht werden kann.

Stapelschutz-Elemente nach Anspruch 6 schützen zum Beispiel die Sitzkörper oder die Stuhlbeine gestapelter erfindungsgemäßer Stühle.

Ein Gewindekörper nach Anspruch 7 gewährleistet eine sichere Verbindung der Stuhlbeine an den Verbindungsplatten.

Eine Schweißverbindung nach Anspruch 8 ist sicher und kostengünstig herstellbar.

Bei der erfindungsgemäßen Verbindungsplatte kommt es, damit das Erfordernis der kompakten Stapelbarkeit erfüllt werden kann, darauf an, dass sie nicht nach oben oder unten über den Sitzkörper übersteht. Seitlich kann die Verbindungsplatte hingegen über den Sitzkörper überstehen. Insbesondere in diesem Fall eignet sich die Verbindungsplatte nach Anspruch 9 zusätzlich zur Anbringung einer Armlehne. Dies reduziert die zum Zusammenbau eines Armlehnen aufweisenden Stuhls erforderlichen Verbindungsbeschläge.

Ein Ausführungsbeispiel der Erfindung wird nachfolgend anhand der Zeichnung näher erläutert. In dieser zeigen:

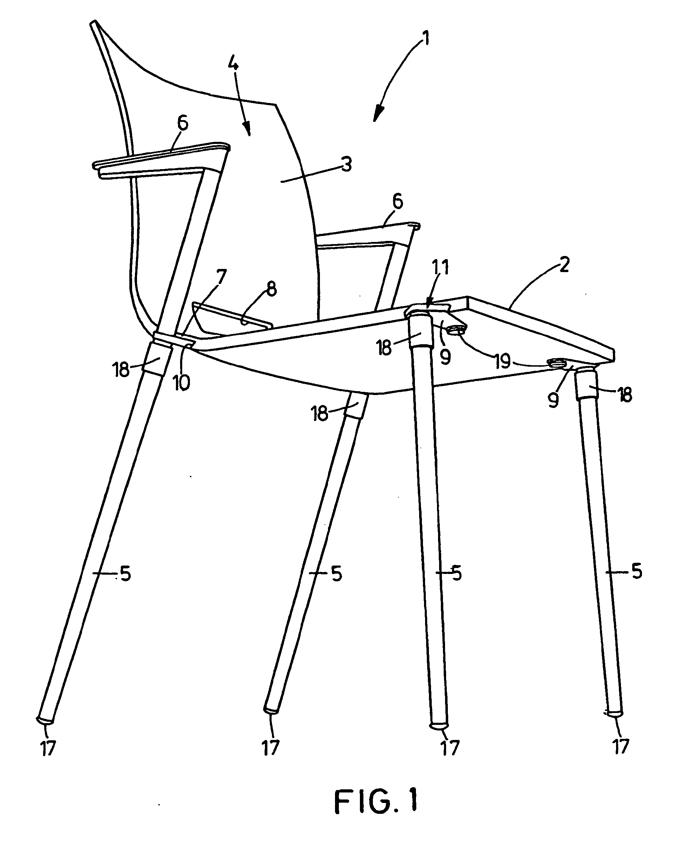

- Fig. 1: eine perspektivische Ansicht eines stapelbaren Stuhls;
- Fig. 2: eine perspektivische Ansicht eines Sitzkörpers sowie eines Stuhlbeins des Stuhls von Fig. 1 in demontiertem Zustand;
- Fig. 3: eine Ansicht einer Verbindungsplatte, über die ein Stuhlbein mit dem Sitzkörper verbunden ist, von oben, wobei das Stuhlbein im Querschnitt im Bereich einer Stapelschutz-Hülse gezeigt ist;
- Fig. 4: einen Schnitt gemäß Linie IV-IV in Fig. 3, wobei das Stuhlbein unterbrochen dargestellt ist; und
- Fig. 5: einen Schnitt gemäß Linie V-V in Fig. 3 mit ausschnittsweise dargestelltem Stuhlbein, wobei zusätzlich der Sitzkörper ausschnittsweise dargestellt ist.

Ein in der Zeichnung insgesamt mit dem Bezugszeichen 1 bezeichneter stapelbarer Stuhl weist einen eine Sitzfläche 2 und eine Rückenlehne 3 umfassenden Sitzkörper 4, vier Stuhlbeine 5 sowie zwei Armlehnen 6 auf.

Der Sitzkörper 4 ist als Sitzschale aus einem flächigen Sperrholz- oder Kunststoffmaterial gefertigt. Das Flächenmaterial des Sitzkörpers 4 hat eine Stärke von circa 15 mm. Die Sitzfläche 2 ist im Wesentlichen eben und geht über eine Beugung 7 in die Rückenlehne 3 nahtlos über. Die Beugung 7 weist hierbei keinen kontinuierlichen Krümmungsradius auf, sondern hat im Scheitelbereich einen ebenen Flächenabschnitt. Im Bereich der Beugung 7 weist der Sitzkörper 4 zudem eine rechteckige Durchbrechung 8 auf.

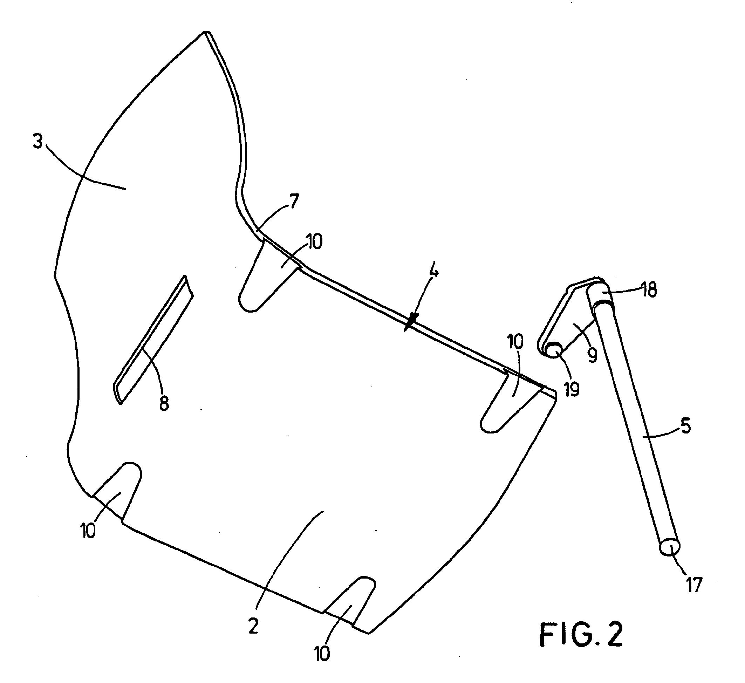

Die Stuhlbeine 5 sind über Verbindungsplatten 9 am Sitzkörper 4 befestigt. Hierzu weist der Sitzkörper 4 für jedes Stuhlbein 5 eine komplementär zur jeweiligen Verbindungsplatte 9 geformte Ausnehmung 10 auf, in die die Verbindungsplatte 9 von der Seite her eingeschoben ist. Dies wird insbesondere aus Fig. 2 deutlich, welche den Sitzkörper 4 und ein Stuhlbein 5 mit zugehöriger Verbindungsplatte 9 in demontiertem Zustand zeigt. Ein Paar Ausnehmungen 10 ist dort vorgesehen, wo der von der Rückenlehne 3 abgewandte Teil der Sitzfläche 2 endet. Ein weiteres Paar von Ausnehmungen 10 ist im ebenen Flächenabschnitt der Beugung 7 vorgesehen. Die Verbindungsplatte 9 wird von der Ausnehmung 10 so aufgenommen, dass sie dort, wo der Stuhl 1 in gestapeltem Zustand anderen Stühlen benachbart ist, nicht über den Sitzkörper 4 übersteht. Im Bereich der Ausnehmungen 10 hat das Flächenmaterial des Sitzkörpers 4 eine Reststärke von ungefähr 8 mm.

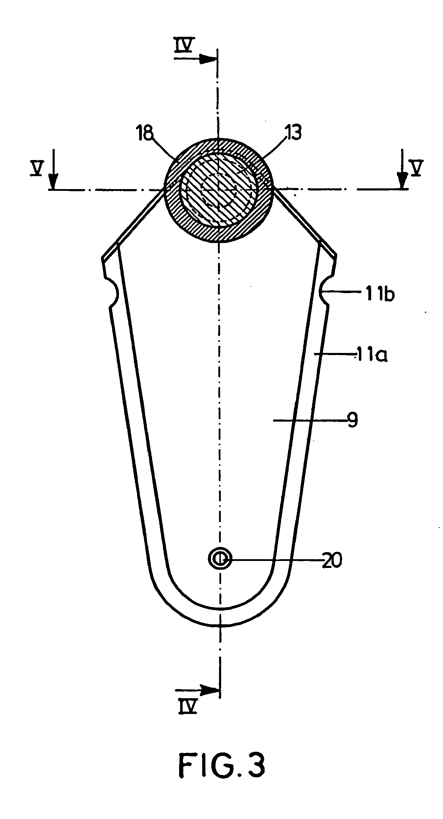

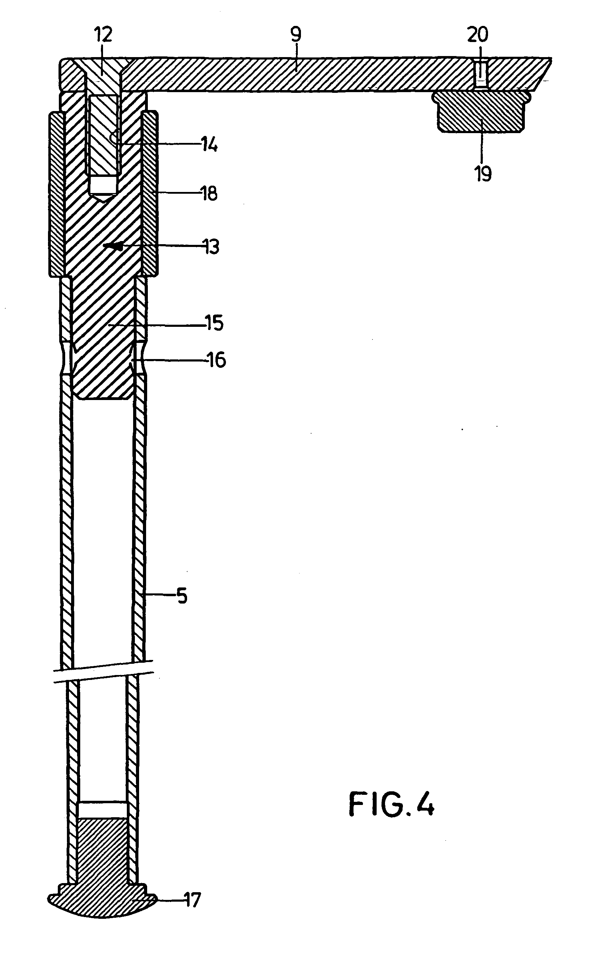

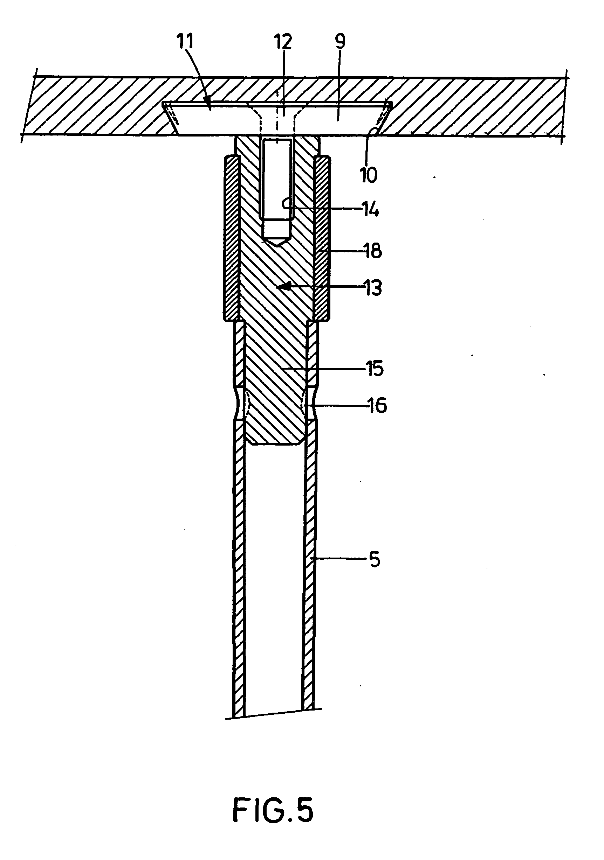

Details einer die Verbindungsplatte 9 aufweisenden Verbindungseinrichtung 11, welche je ein Stuhlbein 5 mit dem Sitzkörper 4 verbindet, zeigen die Fig. 3 bis 5. Wie insbesondere der Fig. 5 zu entnehmen ist, weisen die Verbindungsplatte 9 sowie die Ausnehmung 10 nach Art einer Schwalbenschwanzführung schräg zulaufende Seitenwände 11 a auf. Diese gewährleisten zusammen mit der konischen Verjüngung der Verbindungsplatte 9 in Richtung auf das zunächst einzuschiebende Ende von dieser zu und der hierzu komplementären Formgebung der Ausnehmung 10 einen sicheren Halt der Verbindungsplatte 9 in der Ausnehmung 10. Zudem ist bei montierten Stuhlbeinen 5 die Verbindungsplatte 9 in der zugehörigen Ausnehmung 10 eingeklebt. Die Klebeflächen, über die die Verbindungsplatten 9 in die Ausnehmungen 10 eingeklebt sind, sind zur besseren Klebewirkung entsprechend oberflächenbehandelt, insbesondere aufgerauht. Im Randbereich der Seitenwände 11a sind zwei teilkreisförmige Sammel-Ausnehmungen 11b ausgebildet, in denen überschüssiger Kleber beim Einkleben der Verbindungsplatten 9 in die Ausnehmungen 10 Platz finden kann, ohne ggf. verschmutzend auszutreten.

Weitere Teile der Verbindungseinrichtung 11 sind neben der Verbindungsplatte 9 und der Ausnehmung 10 noch eine Schraube 12 sowie ein mit dem Stuhlbein 5 verbundener Gewindekörper 13. Die Schraube 12 ist als Senkkopfschraube ausgeführt, deren obere Kopffläche in montiertem Zustand mit der oberen Wand der Verbindungsplatte 9 fluchtet. Die Schraube 12 ist in ein hierzu komplementäres Innengewinde 14 des Gewindekörpers 13 eingeschraubt. Letzterer ist als Einschweißbolzen ausgeführt, also in einem unteren Abschnitt 15 in das hohle Stuhlbein 5 eingesteckt und mit diesem über eine Schweißverbindung 16 verschweißt.

Die freien Enden der Stuhlbeine 5 sind mit Gleitkörpern 17 nach Art eines Stopfens verschlossen. Auf den Gleitkörpern 17 steht der Stuhl 1 im Gebrauch und kann einfach verschoben werden.

Zwischen dem Stuhlbein 5 und der Verbindungsplatte 9 ist der Gewindekörper 13 von einer Stapelschutz-Hülse 18 aus einem weichen Kunststoffmaterial umgeben. An der Unterseite der Verbindungsplatte 9 ist zudem an dem vom Stuhlbein 5 entfernten Ende von dieser ein Stapelschutz-Puffer 19 über eine Steckverbindung 20 angebracht. Die Stapelschutz-Hülse 18 und der Stapelschutz-Puffer 19 stellen Stapelschutz-Elemente dar, über die der Stuhl 1 in gestapeltem Zustand an benachbarten Stühlen 1 anliegt. Auf dieses Weise werden der Sitzkörper 4 einerseits und die Stuhlbeine 5 andererseits bei der gestapelten Lagerung des Stuhls 1 geschützt.

An der den Stuhlbeinen 5 gegenüberliegenden Seite ist an den Verbindungsplatten 9, die in die beiden Ausnehmungen 10 in der Beugung 7 eingeschoben sind, jeweils eine Armlehne 6 befestigt.

Eine Mehrzahl von Stühlen 1 kann derart transportiert werden, dass die demontierten Sitzkörper 4 einerseits gestapelt transportiert werden und hiervon getrennt die Stuhlbeine 5 mit den Verbindungseinrichtungen 11 transportiert werden. Beim Zusammenbau der Stühle 1 werden zunächst die Verbindungsplatten 9 an den Stuhlbeinen 5 angebracht und dann in die Ausnehmungen 10 eingeschoben und verklebt.

## Patentansprüche

1. Stapelbarer Stuhl (1)
- mit einem eine Sitzfläche (2) aufweisenden Sitzkörper (4),
- mit einer Mehrzahl von Stuhlbeinen (5),
- wobei jedes Stuhlbein (5) über eine eigene Verbindungseinrichtung (11) mit dem Sitzkörper (4) verbunden ist, die eine Verbindungsplatte (9) aufweist,
- die in eine Ausnehmung (10) des Sitzkörpers (4) derart eingefügt ist, daß sie dort, wo der Stuhl (1) in gestapeltem Zustand anderen Stühlen benachbart ist, nicht über den Sitzkörper (4) übersteht, und
- an der das Stuhlbein (5) befestigt ist,
**dadurch gekennzeichnet, daß** die Ausnehmung (10) und die Verbindungsplatte (9), die zur Verbindungseinrichtung (11) gehören, so geformt sind, daß sie nach Art einer Schwalbenschwanzführung zusammenarbeiten.

2. Stuhl nach Anspruch 1, **dadurch gekennzeichnet, dass** der vorzugsweise eine Sitzlehne (3) umfassende Sitzkörper (4) ebene Flächenelemente (2, 7) aufweist, wobei die Verbindungsplatten (9) im Bereich der ebenen Flächenelemente (2, 7) in den Sitzkörper (4) eingefügt sind.

3. Stuhl nach Anspruch 1 oder 2, **dadurch gekennzeichnet, dass** die Verbindungsplatte (9) so geformt ist, dass sie in den Sitzkörper (4) einschiebbar ist, wobei sich die Verbindungsplatte (9) vorzugsweise in Richtung auf ein zunächst einzuschiebendes Ende von dieser konisch verjüngt.

4. Stuhl nach einem der Ansprüche 1 bis 3, **dadurch gekennzeichnet, dass** die Verbindungsplatte (9) mit dem Sitzkörper (4) verklebt ist, wobei vorzugsweise die Verbindungsplatte (9) mindestens eine Sammel-Ausnehmung (11b) aufweist, welche zusammen mit der gegenüberliegenden Wand der Ausnehmung (10) einen Sammelraum für überschüssigen Klebstoff bildet.

5. Stuhl nach Anspruch 4, **dadurch gekennzeichnet, dass** die aneinander anliegenden Klebeflächen der Verbindungsplatte (9) einerseits und des Sitzkörpers (4) andererseits zur Verbesserung der Klebewirkung oberflächenbehandelt sind.

6. Stuhl nach einem der Ansprüche 1 bis 5, **gekennzeichnet durch** an den Verbindungsplatten (9) und/oder den Stuhlbeinen (5) derart angebrachte Stapelschutz-Elemente (18, 19), dass der Stuhl (1) in gestapeltem Zustand an benachbarten Stühlen zumindest teilweise über die Stapelschutz-Elemente (18, 19) anliegt.

7. Stuhl nach einem der Ansprüche 1 bis 6, **dadurch gekennzeichnet, dass** die Stuhlbeine (5) hohl sind, wobei die Verbindungseinrichtung (11) einen in das Stuhlbein (5) zumindest teilweise eingesetzten Gewindekörper (13) aufweist, in dessen Gewinde (14) eine die Verbindungsplatte (9) am Gewindekörper (13) haltende Schraube (12) eingreift.

8. Stuhl nach Anspruch 7, **dadurch gekennzeichnet, dass** der Gewindekörper (13) über eine Schweißverbindung (16) am Stuhlbein (5) befestigt ist.

9. Stuhl nach einem der Ansprüche 1 bis 8, **dadurch gekennzeichnet, dass** an der Verbindungsplatte (9) eine Armlehne (6) befestigt ist.

## Claims

1. Stackable chair (1)
- having a seat body (4) with a seat surface (2),
- having a plurality of chair legs (5),
- it being the case that each chair leg (5) is connected to the seat body (4) via a dedicated connecting device (11) which has a connecting plate (9)
- which is inserted into a recess (10) of the seat body (4) such that it does not project beyond the seat body (4) where the chair (1), in the stacked state, is adjacent to other chairs, and
- on which the chair leg (5) is fastened,
**characterized in that** the recess (10) and the connecting plate (9), which belong to the connecting device (11), are formed such that they interact in the manner of a dovetail guide.

2. Chair according to Claim 1, **characterized in that** the seat body (4), which preferably comprises a seat back (3), has planar surface elements (2, 7), the connecting plates (9) being inserted into the seat body (4) in the region of the planar surface elements (2, 7).

3. Chair according to Claim 1 or 2, **characterized in that** the connecting plate (9) is formed such that it can be pushed into the seat body (4), the connecting plate (9) tapering conically preferably in the direction of an end which is to be pushed in first of all.

4. Chair according to one of Claims 1 to 3, **characterized in that** the connecting plate (9) is adhesively bonded to the seat body (4), preferably the connecting plate (9) having at least one collecting recess (11b) which, together with the opposite wall of the recess (10), forms a collecting space for excess adhesive.

5. Chair according to Claim 4, **characterized in that** the abutting adhesive-bonding surfaces of the connecting plate (9), on the one hand, and of the seat body (4), on the other hand, are surface-treated for the purpose of improving the adhesive-bonding action.

6. Chair according to one of Claims 1 to 5, **characterized by** stacking-protection elements (18, 19) which are fitted on the connecting plates (9) and/or the chair legs (5) such that the chair (1), in the stacked state, butts at least in part against adjacent chairs via the stacking-protection elements (18, 19).

7. Chair according to one of Claims 1 to 6, **characterized in that** the chair legs (5) are hollow, the connecting device (11) having a threaded body (13) which is inserted, at least in part, into the chair leg (5) and in the thread (14) of which engages a screw (12) which retains the connecting plate (9) on the threaded body (13).

8. Chair according to Claim 7, **characterized in that** the threaded body (13) is fastened on the chair leg (5) via a weld connection (16).

9. Chair according to one of Claims 1 to 8, **characterized in that** an armrest (6) is fastened on the connecting plate (9).

## Revendications

1. Chaise empilable (1)
- avec un corps d'assise (4) comportant une surface d'assise (2),
- avec une pluralité de pieds de chaise (5),
- chaque pied de chaise (5) étant relié avec le corps d'assise (4) par un dispositif d'assemblage (11) propre comportant une plaque d'assemblage (9),
- qui est insérée dans un évidement (10) du corps d'assise (4), de sorte qu'à l'endroit où la chaise (1) est voisine d'autres chaises lorsqu'elle est empilée, elle ne déborde pas par-dessus le corps d'assise (4), et
- sur laquelle est fixé le pied de chaise (5)
**caractérisée en ce que** l'évidement (10) et la plaque d'assemblage (9) qui font partie du dispositif d'assemblage (11) sont façonnés de manière à coopérer à la manière d'un guidage en queue d'aronde.

2. Chaise selon la revendication 1, **caractérisée en ce que** le corps d'assise (4) comprenant de préférence un dossier (3) comporte des éléments de surface (2, 7), les plaques d'assemblage (9) étant insérées dans le corps d'assise (4) dans la région des éléments de surface plans (2, 7).

3. Chaise selon la revendication 1 ou 2, **caractérisée en ce que** la plaque d'assemblage (9) est façonnée de manière à être rétractable dans le corps d'assise (4), la plaque d'assemblage (9) se rétrécissant de manière conique de préférence en direction d'une extrémité rétractable en premier lieu de celle-ci.

4. Chaise selon l'une quelconque des revendications 1 à 3, **caractérisée en ce que** la plaque d'assemblage (9) est collée sur le corps d'assise (4), la plaque d'assemblage (9) comportant de préférence au moins un évidement collecteur (llb), qui en association avec la paroi opposée de l'évidement (10) forme un espace collecteur pour un excédent de colle.

5. Chaise selon la revendication 4, **caractérisée en ce que** les surfaces de collage adjacentes les unes aux autres de la plaque d'assemblage (9) d'une part et du corps d'assise (4) d'autre part ont été soumises à un traitement de surface pour améliorer l'effet de collage.

6. Chaise selon l'une quelconque des revendications 1 à 5, **caractérisée par** des éléments de protection à l'empilage (18, 19), montés sur les plaques d'assemblage (9) et/ou sur les pieds de chaise (5), de sorte que lorsqu'elle est empilée, la chaise (1) s'appuie au moins partiellement contre des chaises voisines, par l'intermédiaire des éléments de protection à l'empilage (18, 19).

7. Chaise selon l'une quelconque des revendications 1 à 6, **caractérisée en ce que** les pieds de chaise (5) sont creux, le dispositif d'assemblage (11) comportant un corps fileté (13) introduit au moins partiellement dans le pied de chaise (5), dans le filetage (14) duquel s'engage une vis (12) maintenant la plaque d'assemblage (9) sur le corps fileté (13).

8. Chaise selon la revendication 7, **caractérisée en ce que** le corps fileté (13) est fixé sur le pied de chaise (5) par l'intermédiaire d'une liaison par soudage (16) .

9. Chaise selon l'une quelconque des revendications 1 à 8, **caractérisée en ce qu'**un accoudoir (6) est fixé sur la plaque d'assemblage (9).
